# DEMANDE DE BREVET EUROPEEN

(11) **EP 4 659 945 A1**
(43) Date de publication de la demande: **10.12.2025**
(21) Numéro de dépôt: 25179845.0
(22) Date de dépôt: 30.05.2025
(51) Int. Cl.: B29D 30/00, B29D 30/06, G05B 19/418

(54) **PROCÉDÉ POUR LA PRÉPARATION D'UN ÉLÉMENT DE PNEUMATIQUE DANS UN SYSTÈME CONNECTÉ**

(30) Priorité: 06.06.2024 FR 2405967
(71) Demandeur: Goodyear France s.a.s., 92400 Courbevoie (FR)
(72) Inventeur: AUDIBERT, Luc, L-9028 Warken (LU); REICHLING, Jean, L-8156 Bridel (LU); DAHOU, Samir, 80480 Pont-de-Metz (FR); SAINT-POL, Benoit, 80000 Amiens (FR); FOURME, Sylvain, L-7663 Medernach (LU); ERAUD, Pierre Jean, 80000 Amiens (FR); COLIN - DE VERDIERE, Francois, 92200 Neuilly sur Seine (FR); DOS SANTOS NASCIMENTO, Karen, 80080 Amiens (FR); BROCOURT, Mickael, L-7475 Schoos (LU)
(74) Mandataire: Kutsch, Bernd

(57) **Abrégé**

La présente invention concerne un procédé pour la préparation d'un élément de pneumatique dans un système connecté, le système connecté comprenant une base de données et n unités de traitement X(i), avec i= 1...n et avec n≥3, les n unités étant connectées les unes aux autres par un réseau, et conçues chacune pour effectuer une ou plusieurs étapes de préparation d'un pneumatique. La présente invention concerne en outre un système pour la mise en œuvre dudit procédé pour la préparation d'un élément de pneumatique et un élément de pneumatique pouvant être obtenu ou obtenu par ledit procédé.

## Description

La présente invention concerne un procédé pour la préparation d'un élément de pneumatique P dans un système connecté, le système connecté comprenant une base de données et n unités de traitement X(i), avec i= 1... n et avec n≥3, les n unités étant connectées les unes aux autres par un réseau, et conçues chacune pour effectuer une ou plusieurs étapes de préparation d'un pneumatique. La présente invention concerne en outre un système pour la mise en œuvre dudit procédé pour la préparation d'un élément de pneumatique et un élément de pneumatique pouvant être obtenu ou obtenu par ledit procédé.

Dans l'industrie du pneumatique, il est important de répondre au mieux et le plus rapidement possible au besoin des constructeurs automobiles, en particulier en vue du passage aux véhicules électriques. De plus, l'optimisation des procédés afin de limiter les déchets et d'augmenter la productivité est importante dans le domaine des pneumatiques qui est très concurrentiel. C'est pourquoi développer de nouvelles méthodes de préparation de pneumatiques est essentielle afin de s'adapter aux besoins et aux dernières règlementations. Même si au cours des dernières années différentes méthodes ont été développées, il y a toujours le besoin de développer de nouvelles méthodes notamment pour l'optimisation des étapes de fabrication, l'augmentation de la qualité des pneumatiques et la diminution des déchets et des émissions de gaz à effet de serre.

C'est pourquoi, un objet de la présente invention est de développer un procédé pour la préparation d'un élément de pneumatique permettant de préparer des pneumatiques améliorés et d'optimiser les étapes de fabrication permettant entre autres, la diminution des déchets et/ou la diminution des émissions de gaz à effet de serre, tout en étant rentable.

Ainsi, la présente invention concerne un procédé pour la préparation d'un élément de pneumatique P dans un système connecté, le système connecté comprenant une base de données et n unités de traitement X(i), avec i= 1... n et avec n≥3, les n unités étant connectées les unes aux autres par un réseau, et conçues chacune pour effectuer une ou plusieurs étapes de préparation d'un pneumatique comprenant au moins l'une parmi une étape de mélange, une étape d'assemblage, une étape de test, et une étape de vulcanisation, ledit procédé comprenant :
(i) pour chaque unité de traitement X(i) avec i= 1...n-1,
   - déterminer le traitement à effectuer dans l'unité de traitement X(i) pour obtenir un élément E(i) du pneumatique P à l'aide de la base de données ;
   - effectuer le traitement dans l'unité de traitement X(i), obtenant l'élément E(i) du pneumatique P ;
   - communiquer à l'unité de traitement X(i+1), et optionnellement à l'unité de traitement X(i-1) si applicable, la ou les informations nécessaires sur le traitement effectué dans l'unité de traitement X(i) et/ou sur E(i) avant de commencer le traitement dans l'unité de traitement X(i+1) ;
   - déplacer l'élément E(i) de X(i) vers X(i+1) ; et
(ii) pour l'unité de traitement X(n),
   - déterminer le traitement à effectuer dans l'unité de traitement X(n) pour obtenir un élément E(n) du pneumatique P à l'aide de la base de données ;
   - effectuer le traitement dans l'unité de traitement X(n), obtenant l'élément E(n) du pneumatique P ;
   - communiquer à une ou plusieurs des unités de traitement X(i), avec i= 1...n-1, la ou les informations nécessaires sur le traitement effectué dans l'unité de traitement X(n) et/ou sur E(n).

En effet, le procédé de la présente invention permet de préparer un élément de pneumatique, de préférence un pneumatique, de façon optimisée au niveau de chaque unité de traitement et pour chaque élément de pneumatique à l'inverse des procédés actuels qui se basent en grande partie seulement sur des calculs empiriques par lot de production.

De préférence déterminer le traitement à effectuer dans l'unité de traitement X(i), avec i= 1... n, pour obtenir un élément E(i) du pneumatique P à l'aide de la base de données comprend :
- collecter des données sur le traitement dans l'unité de traitement X(i) ;
- analyse des données ;
- identifier les actions à effectuer pour le traitement dans X(i), les actions à effectuer comprenant si nécessaire un changement de fonctionnement par rapport à la dernière utilisation de l'unité de traitement X(i).

De préférence déterminer le traitement à effectuer dans l'unité de traitement X(i), avec i= 1... n, pour obtenir un élément E(i) du pneumatique P à l'aide de la base de données comprend :
- collecter des données sur le traitement dans l'unité de traitement X(i) ;
- analyse des données ;
- identifier les actions à effectuer pour le traitement dans X(i), les actions à effectuer comprenant si nécessaire un changement de fonctionnement par rapport à la dernière utilisation de l'unité de traitement X(i) ; et
- optionnellement identifier les actions à effectuer pour le traitement dans X(i+1), les actions à effectuer comprenant si nécessaire un changement de fonctionnement par rapport à la dernière utilisation de l'unité de traitement X(i+1).

Cela permet d'optimiser le fonctionnement de l'unité suivante en fonction des données existantes de cette unité et/ou du résultat de l'unité précédente.

De préférence l'analyse des données est faite en temps réel, plus préférablement l'analyse est répétée après chaque cycle de traitement pour une unité de traitement X(i) donnée.

Les données collectées sur le traitement dans l'unité de traitement X(i) comprennent par exemple une ou plusieurs images, des conditions de traitement comme une température, une pression, une durée, une dimension, et/ou un ou plusieurs paramètres physiques et/ou chimiques d'un élément de pneumatique.

Chaque cycle de traitement a de préférence une durée dans la gamme de 1 seconde à 2 minutes.

De préférence le procédé de la présente invention comprend l'utilisation d'un ou plusieurs jumeaux numériques.

De préférence, l'un ou plusieurs jumeaux numériques se basent sur des données numériques de conception de pneumatiques, des données recueillies par l'Internet des Objets et d'une interface Homme-machine qui met en corrélation et présente les données pour favoriser la prise de décision. De préférence, la prise de décision est automatisée.

Dans le contexte de la présente invention, le terme « jumeau numérique » se dit d'une représentation virtuelle d'un produit/objet (par ex. une unité de traitement, un élément de pneumatique, une usine) ou d'un procédé qui permet de comprendre et de prévoir ses équivalents physiques afin d'améliorer un objet ou une méthode.

De préférence chaque unité de traitement X(i), avec i= 1... n, et/ou chaque élément E(i), avec i= 1... n, a un jumeau numérique, plus préférablement au moins chaque unité de traitement X(i) a un jumeau numérique.

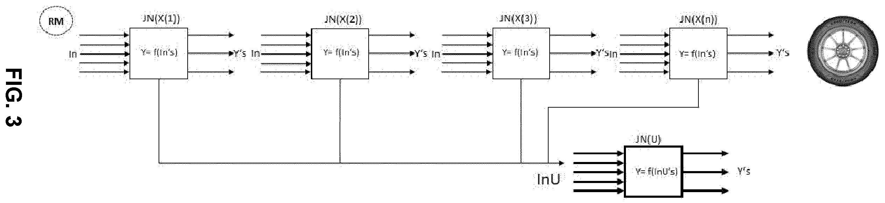

De préférence le système connecté, comprenant les n unités de traitement X(i), avec i= 1...n, a un jumeau numérique. Ceci est illustré à la FIG. 3 qui représente le fait d'avoir des jumeaux numériques à plusieurs niveaux.

De préférence le système connecté comprend en outre un moyen de calculs, plus préférablement un processeur, une interface de communication, une pluralité de capteurs, un ou plusieurs espaces de stockage local comprenant la base de données, et une source d'énergie.

Dans le contexte de la présente invention, le processeur coordonne et peut contrôler les composants du système. Le processeur peut permettre de lire et/ou écrire des instructions de programmes d'ordinateur et de données à partir de ou vers l'un ou plusieurs espaces de stockage. Le processeur peut comprendre un microprocesseur.

De préférence la source d'énergie comprend une source d'énergie renouvelable.

De préférence le système connecté est associé à un espace de stockage en ligne (un « cloud ») lui-même connecté à un moyen de calcul, de préférence un processeur.

Dans le contexte de la présente invention, l'un ou plusieurs espaces de stockage local permettent de déployer une « informatique en périphérie de réseau » ou un « edge computing » qui est le lien entre les unités de traitement et l'espace de stockage en ligne (le « cloud »). L'edge computing peut permettre de collecter, d'analyser et de synchroniser des données ainsi que de prendre une décision locale de traitement et de stockage avant d'envoyer uniquement les données pertinentes vers le « cloud » pour des opérations informatiques plus complexes.

En effet, une analyse poussée des données est effectuée dans l'espace de stockage en ligne et son moyen de calculs, par ex. processeur, et comprend la mise à jour des calculs et/ou des algorithmes qui sont ensuite transmis à l'espace de stockage local du système connecté (Edge computing) pour enfin communiquer aux unités de traitements. L'espace de stockage local peut aussi communiquer avec un ou plusieurs opérateurs humains si besoin.

De préférence la base de données du système connecté comprend des données générées par une ou plusieurs unités de traitement pour la préparation d'un élément de pneumatique et/ou des données obtenues par une ou plusieurs usines de préparation de pneumatique.

De préférence les données générées par une ou plusieurs unités de traitement pour la préparation d'un élément de pneumatique sont des données obtenues lors de la préparation d'un élément de pneumatique incluant les étapes de préparation comme par exemple une étape de mélange, une étape d'assemblage, et une étape de vulcanisation mais aussi une étape de test.

De préférence la base de données du système connecté est mise à jour constamment.

De préférence chacune des n unités de traitement X(i), avec i= 1... n se réfère à un traitement particulier et est différente des autres unités de traitement.

De préférence en plus de l'étape de mélange, l'étape d'assemblage, et/ou l'étape de vulcanisation, l'étape de test est effectuée dans X(i), avec i= 1... n.

De préférence au moins un parmi les éléments E(i) de pneumatique, avec i= 1... n, comprend un moyen d'identification, ce moyen étant plus préférablement une étiquette, plus préférablement une étiquette avec un code barre, ou une étiquette avec un QR code, ou une radio-étiquette (en anglais « RFID tag »).

De préférence, le code barre ou le QR code ou la radio-étiquette est unique pour chaque élément de pneumatique. Cela permet d'identifier l'élément de pneumatique et de déterminer les conditions de traitement de manière individualisée et non plus seulement par lot.

De préférence la préparation de l'élément E(i), avec i=1... n, de pneumatique est automatisée.

De préférence le traitement à effectuer dans l'unité de traitement X(i), avec x= 1... n, est automatisé.

De préférence le réseau est un réseau interne. Le réseau interne pouvant être de type intranet.

De préférence les n unités sont connectées digitalement les unes aux autres.

De préférence E(n) est un pneumatique vulcanisé.

De préférence déplacer l'élément E(i) de X(i) vers X(i+1) comprend déplacer l'élément E(i) de X(i) avec un ou plusieurs moyens de déplacement, de préférence étant un ou plusieurs parmi un bras robotisé, un chariot et un tapis roulant.

De préférence l'un ou plusieurs moyens de déplacement (d'élément E(i)) sont connectés digitalement à une ou plusieurs des n unités de traitement X(i), avec i= 1... n.

De préférence le chariot est identifiable par une étiquette, plus préférablement une étiquette avec un code barre, ou une étiquette avec un QR code, ou une radio-étiquette (en anglais « RFID tag »).

La présente invention concerne en outre un élément de pneumatique, de préférence étant un pneumatique, pouvant être obtenu ou obtenu selon le procédé de la présente invention.

La présente invention concerne en outre un système connecté, de préférence étant une usine connectée, pour la mise en œuvre du procédé pour la préparation d'un élément de pneumatique P selon la présente invention, ledit système connecté comprenant
- une base de données ; et
- n unités de traitement X(i), avec i= 1... n et avec n≥3, les n unités étant connectées les unes aux autres par un réseau, et conçues chacune pour effectuer une ou plusieurs étapes de préparation d'un pneumatique comprenant au moins l'une parmi une étape de mélange, une étape d'assemblage, une étape de test, et une étape de vulcanisation.

De préférence le système comprend en outre un processeur, une interface de communication, une pluralité de capteurs, un ou plusieurs espaces de stockage local comprenant la base de données, et une source d'énergie.

De préférence la source d'énergie comprend une source d'énergie renouvelable.

De préférence le système connecté est associé à un espace de stockage en ligne (un « cloud ») lui-même connecté à un moyen de calcul, plus préférablement un processeur.

De préférence la base de données du système connecté comprend des données générées par une ou plusieurs unités de traitement pour la préparation d'un élément de pneumatique et/ou des données obtenues par une ou plusieurs usines de préparation de pneumatique.

De préférence le système comprend en outre plusieurs moyens de déplacement, plus préférablement étant un ou plusieurs bras robotisés, un ou plusieurs chariots et/ou un ou plusieurs tapis roulants.

La présente invention est en outre illustrée par l'ensemble suivant de modes de réalisation et de combinaisons de modes de réalisation résultant des dépendances et des références arrière comme indiqué. En particulier, il convient de noter que dans chaque cas où une gamme de modes de réalisation est mentionnée, par exemple dans le contexte d'un terme tel que « Le procédé selon l'un quelconque des modes de réalisation 1 à 3 », chaque mode de réalisation dans cette gamme est censé être explicitement divulgué à l'Homme du métier, c'est-à-dire que la formulation de ce terme doit être comprise par l'Homme du métier comme étant synonyme de « le procédé selon l'un quelconque des modes de réalisation 1, 2 et 3 ». En outre, il est explicitement noté que l'ensemble de modes de réalisation suivant représente une partie convenablement structurée de la description générale dirigée vers des aspects préférés de la présente invention et, par conséquent, soutient de manière appropriée, mais ne représente pas les revendications de la présente invention.

Selon le mode de réalisation 1 de la présente invention, un procédé pour la préparation d'un élément de pneumatique P dans un système connecté, le système connecté comprenant une base de données et n unités de traitement X(i), avec i= 1... n et avec n≥3, les n unités étant connectées les unes aux autres par un réseau, et conçues chacune pour effectuer une ou plusieurs étapes de préparation d'un pneumatique comprenant au moins l'une parmi une étape de mélange, une étape d'assemblage, une étape de test, et une étape de vulcanisation, ledit procédé comprenant :
(i) pour chaque unité de traitement X(i) avec i= 1...n-1,
   - déterminer le traitement à effectuer dans l'unité de traitement X(i) pour obtenir un élément E(i) du pneumatique P à l'aide de la base de données ;
   - effectuer le traitement dans l'unité de traitement X(i), obtenant l'élément E(i) du pneumatique P ;
   - communiquer à l'unité de traitement X(i+1), et optionnellement à l'unité de traitement X(i-1) si applicable, la ou les informations nécessaires sur le traitement effectué dans l'unité de traitement X(i) et/ou sur E(i) avant de commencer le traitement dans l'unité de traitement X(i+1) ;
   - déplacer l'élément E(i) de X(i) vers X(i+1) ; et
(ii) pour l'unité de traitement X(n),
   - déterminer le traitement à effectuer dans l'unité de traitement X(n) pour obtenir un élément E(n) du pneumatique P à l'aide de la base de données ;
   - effectuer le traitement dans l'unité de traitement X(n), obtenant l'élément E(n) du pneumatique P ;
   - communiquer à une ou plusieurs des unités de traitement X(i), avec i= 1...n-1, la ou les informations nécessaires sur le traitement effectué dans l'unité de traitement X(n) et/ou sur E(n).

Mode de réalisation 2 : le procédé selon le mode de réalisation 1, dans lequel déterminer le traitement à effectuer dans l'unité de traitement X(i), avec i= 1... n, pour obtenir un élément E(i) du pneumatique P à l'aide de la base de données comprend :
- collecter des données sur le traitement dans l'unité de traitement X(i) ;
- analyse des données ;
- identifier les actions à effectuer pour le traitement dans X(i), les actions à effectuer comprenant si nécessaire un changement de fonctionnement par rapport à la dernière utilisation de l'unité de traitement X(i).

Mode de réalisation 3 : le procédé selon le mode de réalisation 2, dans lequel l'analyse des données est faite en temps réel, de préférence l'analyse est répétée après chaque cycle de traitement pour une unité de traitement X(i) donnée.

Mode de réalisation 4 : le procédé selon l'un quelconque des modes de réalisation 1 à 3, comprend l'utilisation d'un ou plusieurs jumeaux numériques.

Mode de réalisation 5 : le procédé selon le mode de réalisation 4, dans lequel chaque unité de traitement X(i), avec i= 1... n, et/ou chaque élément E(i), avec i= 1... n, a un jumeau numérique, de préférence au moins chaque unité de traitement X(i) a un jumeau numérique.

Mode de réalisation 6 : le procédé selon le mode réalisation 4 ou 5, dans lequel le système connecté, comprenant les n unités de traitement X(i), avec i= 1... n, a un jumeau numérique.

Mode de réalisation 7 : le procédé selon l'un quelconque des modes de réalisation 1 à 6, dans lequel le système connecté comprend en outre un processeur, une interface de communication, une pluralité de capteurs, un ou plusieurs espaces de stockage local comprenant la base de données, et une source d'énergie.

Mode de réalisation 8 : le procédé selon l'un quelconque des modes de réalisation 1 à 7, dans lequel le système connecté est associé à un espace de stockage en ligne (un « cloud ») lui-même connecté à un moyen de calcul, de préférence un processeur.

Mode de réalisation 9 : le procédé selon l'un quelconque des modes de réalisation 1 à 8, dans lequel la base de données du système connecté comprend des données générées par une ou plusieurs unités de traitement pour la préparation d'un élément de pneumatique et/ou des données obtenues par une ou plusieurs usines de préparation de pneumatique.

Mode de réalisation 10 : le procédé selon l'un quelconque des modes de réalisation 1 à 9, dans lequel chacune des n unités de traitement X(i), avec i= 1... n se réfère à un traitement particulier et est différente des autres unités de traitement.

Mode de réalisation 11 : le procédé selon l'un quelconque des modes de réalisation 1 à 10, dans lequel la préparation d'un élément de pneumatique est automatisée.

Mode de réalisation 12 : le procédé selon l'un quelconque des modes de réalisation 1 à 11, dans lequel déplacer l'élément E(i) de X(i) vers X(i+1) comprend déplacer l'élément E(i) de X(i) avec un ou plusieurs moyens de déplacement, de préférence étant un ou plusieurs parmi un bras robotisé, un chariot et un tapis roulant.

Mode de réalisation 13 : elément de pneumatique, de préférence étant un pneumatique, pouvant être obtenu ou obtenu selon le procédé d'un quelconque des modes de réalisation 1 à 12.

Mode de réalisation 14 : système connecté, de préférence étant une usine connectée, pour la mise en œuvre du procédé pour la préparation d'un élément de pneumatique P selon l'un quelconque des modes de réalisation 1 à 12, ledit système connecté comprenant
- une base de données ; et
- n unités de traitement X(i), avec i= 1... n et avec n≥3, les n unités étant connectées les unes aux autres par un réseau, et conçues chacune pour effectuer une ou plusieurs étapes de préparation d'un pneumatique comprenant au moins l'une parmi une étape de mélange, une étape d'assemblage, une étape de test, et une étape de vulcanisation.

### Description des figures

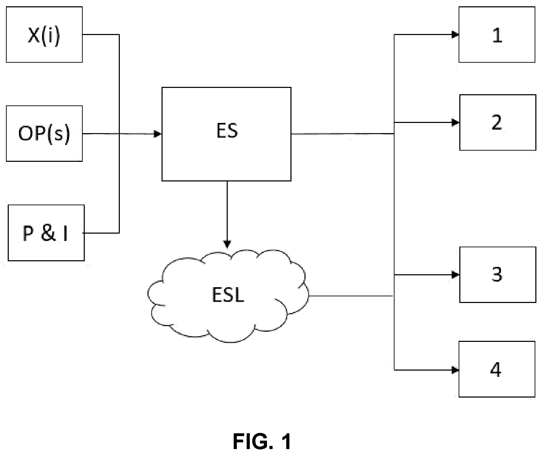

La FIG.1 est un schéma illustrant le système connecté selon des modes de réalisation de la présente invention et utilisé dans le procédé selon des modes de réalisation de la présente invention. Le procédé selon des modes de réalisation de la présente invention permet de s'informer sur le procédé, de diriger le procédé et de prendre des décisions pour chaque élément de pneumatique et chaque unité de traitement (et non plus par lot comme cela existe actuellement). Le présent procédé pour la préparation d'un élément de pneumatique permet d'ainsi préparer des pneumatiques améliorés tout en limitant les déchets et étant rentable.
X(i) = Unités de traitement
OP(s) = Les opérateurs
P & I = Processeur et interface de communication
ES = Espace de stockage (local) comprenant la base de données - Edge computing
ESL = Espace de stockage en ligne (le cloud)
1 = Analyse de contrôle du procédé
2= Un ou plusieurs jumeaux numériques présents à 2 niveaux - au niveau des unités de traitement et au niveau de l'usine - voir aussi FIG. 3.
3= Analyse du contrôle qualité
4= Analyse de performance du système connecté (à savoir de l'usine)

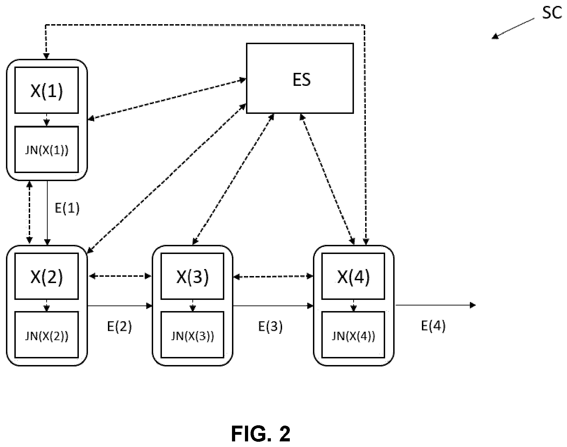

La FIG. 2 est un schéma illustrant le système connecté selon des modes de réalisation de la présente invention et utilisé dans le procédé selon des modes de réalisation de la présente invention. En particulier, l'utilisation de jumeaux numériques et la communication entre les unités de traitement ainsi qu'avec l'espace de stockage local (concept d'edge computing) y sont illustrés.
SC = Système connecté (ex. une usine)
X(i) = Unités de traitement
JN(X(i)) = Jumeaux numériques des unités X(i)
E(i) = Elément de pneumatique
ES = Espace de stockage comprenant la base de données - Edge computing - cet espace est lié de préférence à une interface de communication et un processeur (cf. FIG.1)
Ligne pleine = Sens de production
Ligne en pointillé = Communication entre les unit du système connecté

La FIG. 3 est une représentation schématique de l'utilisation de jumeaux numériques dans le système connecté de la présente invention et utilisé dans le procédé selon la présente invention. Cette représentation illustre les deux niveaux d'information disponible grâce aux jumeaux numériques, à savoir au niveau des unités de traitement X(i), de préférence de chaque unités de traitement, (niveau 1) et au niveau de l'usine (niveau 2). Ainsi grâce à cette utilisation, il est possible de connecter le tout, à savoir des matières premières jusqu'au pneumatique vulcanisé pour une meilleur optimisation des étapes et une amélioration de la qualité des éléments de pneumatique.
RM = matières premières
U = Usine connectée
JN(X(i)) = Jumeau numérique de X(i)
JN(U) = Jumeau numérique de l'usine U
In = Variables
Y = fonction d'un ou plusieurs variables
InU = Variables obtenues et sélectionnées parmi les données recueillies pour chaque unité X(i) grâce aux JN(X(i).

## Revendications

1. Procédé pour la préparation d'un élément de pneumatique P dans un système connecté, le système connecté comprenant une base de données et n unités de traitement X(i), avec i= 1... n et avec n≥3, les n unités étant connectées les unes aux autres par un réseau, et conçues chacune pour effectuer une ou plusieurs étapes de préparation d'un pneumatique comprenant au moins l'une parmi une étape de mélange, une étape d'assemblage, une étape de test, et une étape de vulcanisation, ledit procédé comprenant :
(i) pour chaque unité de traitement X(i) avec i= 1...n-1,
- déterminer le traitement à effectuer dans l'unité de traitement X(i) pour obtenir un élément E(i) du pneumatique P à l'aide de la base de données ;
- effectuer le traitement dans l'unité de traitement X(i), obtenant l'élément E(i) du pneumatique P ;
- communiquer à l'unité de traitement X(i+1), et optionnellement à l'unité de traitement X(i-1) si applicable, la ou les informations nécessaires sur le traitement effectué dans l'unité de traitement X(i) et/ou sur E(i) avant de commencer le traitement dans l'unité de traitement X(i+1) ;
- déplacer l'élément E(i) de X(i) vers X(i+1) ; et
(ii) pour l'unité de traitement X(n),
- déterminer le traitement à effectuer dans l'unité de traitement X(n) pour obtenir un élément E(n) du pneumatique P à l'aide de la base de données ;
- effectuer le traitement dans l'unité de traitement X(n), obtenant l'élément E(n) du pneumatique P ;
- communiquer à une ou plusieurs des unités de traitement X(i), avec i= 1...n-1, la ou les informations nécessaires sur le traitement effectué dans l'unité de traitement X(n) et/ou sur E(n).

2. Le procédé selon la revendication 1, dans lequel déterminer le traitement à effectuer dans l'unité de traitement X(i), avec i= 1... n, pour obtenir un élément E(i) du pneumatique P à l'aide de la base de données comprend :
- collecter des données sur le traitement dans l'unité de traitement X(i) ;
- analyse des données ;
- identifier les actions à effectuer pour le traitement dans X(i), les actions à effectuer comprenant si nécessaire un changement de fonctionnement par rapport à la dernière utilisation de l'unité de traitement X(i).

3. Le procédé selon la revendication 2, dans lequel l'analyse des données est faite en temps réel, de préférence l'analyse est répétée après chaque cycle de traitement pour une unité de traitement X(i) donnée.

4. Le procédé selon l'une quelconque des revendications 1 à 3, comprend l'utilisation d'un ou plusieurs jumeaux numériques.

5. Le procédé selon la revendication 4, dans lequel chaque unité de traitement X(i), avec i= 1... n, et/ou chaque élément E(i), avec i= 1... n, a un jumeau numérique, de préférence au moins chaque unité de traitement X(i) a un jumeau numérique.

6. Le procédé selon la revendication 4 ou 5, dans lequel le système connecté, comprenant les n unités de traitement X(i), avec i= 1... n, a un jumeau numérique.

7. Le procédé selon l'une quelconque des revendications 1 à 6, dans lequel le système connecté comprend en outre un processeur, une interface de communication, une pluralité de capteurs, un ou plusieurs espaces de stockage local comprenant la base de données, et une source d'énergie.

8. Le procédé selon l'une quelconque des revendications 1 à 7, dans lequel le système connecté est associé à un espace de stockage en ligne lui-même connecté à un moyen de calcul, de préférence un processeur.

9. Le procédé selon l'une quelconque des revendications 1 à 8, dans lequel la base de données du système connecté comprend des données générées par une ou plusieurs unités de traitement pour la préparation d'un élément de pneumatique et/ou des données obtenues par une ou plusieurs usines de préparation de pneumatique.

10. Le procédé selon l'une quelconque des revendications 1 à 9, dans lequel chacune des n unités de traitement X(i), avec i= 1... n se réfère à un traitement particulier et est différente des autres unités de traitement.

11. Le procédé selon l'une quelconque des revendications 1 à 10, dans lequel la préparation d'un élément de pneumatique est automatisée.

12. Elément de pneumatique, de préférence étant un pneumatique, pouvant être obtenu ou obtenu selon le procédé d'une quelconque des revendications 1 à 11.

13. Système connecté, de préférence étant une usine connectée, pour la mise en œuvre du procédé pour la préparation d'un élément de pneumatique P selon l'une quelconque des revendications 1 à 11, ledit système connecté comprenant
- une base de données ; et
- n unités de traitement X(i), avec i= 1... n et avec n≥3, les n unités étant connectées les unes aux autres par un réseau, et conçues chacune pour effectuer une ou plusieurs étapes de préparation d'un pneumatique comprenant au moins l'une parmi une étape de mélange, une étape d'assemblage, une étape de test, et une étape de vulcanisation.
